# EUROPEAN PATENT APPLICATION

(11) **EP 3 151 611 A1**
(43) Date of publication of application: **05.04.2017**
(21) Application number: 14896531.2
(22) Date of filing: 30.06.2014
(51) Int. Cl.: H04W 48/20

(54) **NETWORK ELEMENT SELECTION ENTITY AND USER EQUIPMENT REGISTRATION METHOD**

(71) Applicant: Huawei Technologies Co., Ltd., Longgang District Shenzhen, Guangdong 518129 (CN)
(72) Inventor: WANG, Hai, Shenzhen Guangdong 518129 (CN)
(74) Representative: Pfenning, Meinig & Partner mbB
(86) International application number: PCT/CN2014/081305
(87) International publication number: WO 2016/000189

(57) **Abstract**

Embodiments of the present invention provide a network element selection entity and a user equipment registration method, which belong to the field of wireless communications technologies. The network element selection entity is selected by a serving base station device of a UE as a first serving MMNE of the UE, and includes: a communications unit, configured to receive or send information; a processing unit, configured to: in a registration procedure in which the UE registers with the network element selection entity, acquire user information of the UE; determine, according to a correspondence between the user information and a candidate serving MMNE, a second serving MMNE selected for the UE; allocate, to the UE, a GUTI that belongs to the second serving MMNE; instruct the UE to re-initiate an attach procedure, so that the UE attaches to the second serving MMNE according to the GUIT. In the present invention, a serving MMNE is selected for a UE according to a correspondence between user information of the UE and a candidate serving MMNE. In this way, selection of a specific MMNE for a UE that has a particular feature is implemented, which improves flexibility of selecting an MMNE. By modifying a correspondence between user information of a UE and a candidate serving MMNE, an operator can select an MMNE for the UE according to different policies, which facilitates network management of the operator.

## Description

### TECHNICAL FIELD

The present invention relates to the field of wireless communications technologies, and in particular, to a network element selection entity and a user equipment registration method.

### BACKGROUND

With the rapid development of wireless communications technologies, more types and an increasing number of services are processed by a network. For example, on a 4G network, to meet user service requirements, an operator generally deploys a plurality of MMEs (Mobility Management Entity, mobility management entity) on a network to offload users and services. Therefore, when a UE (User Equipment, user equipment) establishes a connection to an eNB (evolved Node B, evolved base station), the eNB needs to select an MME to serve the UE if a message transferred during the process of establishing the connection does not carry an identifier of a registered MME.

A related technology usually selects an MME in the following manners:
Manner 1: An operator configures a weight of each MME on a network in advance by using an EMS (Element Management System, element management system) that manages each MME, and delivers a weight configuration result of each MME to an eNB. On this basis, when a UE connects to the eNB, if the UE does not notify the eNB of an identifier of the MME with which the UE registers, the eNB selects, according to the received weight result, an MME as the MME serving the UE.

Manner 2: On a network on which an MME of a virtual operator and an MME of a traditional operator are deployed, an eNB connects to both the MME of the virtual operator and the MME of the traditional operator, and the eNB adds a network identifier of the virtual operator and a network identifier of the traditional operator in an air interface broadcast message. When a UE connects to the eNB, the UE returns one of the network identifiers to the eNB, and the eNB selects the MME of the virtual operator or the MME of the traditional operator for the UE according to the network identifier returned by the UE.

The foregoing two manners also apply to selection of an SGSN (Serving Gprs Support Node, serving GPRS support node) on a 2G/3G network. Generally, an SGSN and an MME are collectively called MMNEs (Mobility Management Network Element, mobility management network element).

It may be seen that, when selecting an MMNE for a UE, the related technology mainly depends on a weight or on selection made by the UE, which lacks flexibility for current fast-developing networks.

### SUMMARY

Embodiments of the present invention provide a network element selection entity and a user equipment registration method. By using the network element selection entity and the user equipment registration method provided in the embodiments of the present invention, an MMNE can be selected for the UE flexibly. Technical solutions are as follows:

According to a first aspect, a network element selection entity is provided, where the network element selection entity is selected by a serving base station device of a user equipment UE as a first mobility management network element MMNE of the UE, and the network element selection entity includes:
a communications unit, configured to receive or send information;
a processing unit, configured to:
   in a registration procedure in which the UE registers with the network element selection entity, acquire user information of the UE by using the communications unit;
   determine, according to a correspondence between the user information and at least one candidate serving MMNE, a second serving MMNE selected for the UE;
   allocate, to the UE by using the communications unit, a globally unique temporary user equipment identity GUTI that belongs to the second serving MMNE;
   instruct, by using the communications unit, the UE to re-initiate an attach procedure, so that the UE attaches to the second serving MMNE according to the GUIT.

With reference to the first aspect, in a first possible implementation manner of the first aspect, the processing unit is specifically configured to:
in the registration procedure, acquire, by using the communications unit, the user information of the UE from the UE or a home subscriber server HSS.

With reference to the first aspect or the first possible implementation manner of the first aspect, in a second possible implementation manner of the first aspect, the processing unit is specifically configured to:
determine the second serving MMNE from a plurality of candidate serving MMNEs according to a correspondence between the user information and the plurality of candidate serving MMNEs, and priorities of the plurality of candidate serving MMNEs.

With reference to any possible implementation manner of the first aspect to the second possible implementation manner of the first aspect, in a third possible implementation manner of the first aspect, the processing unit is further configured to:
if the UE has registered with a third serving MMNE before the registration procedure, instruct, by using the communications unit, an element management system EMS to instruct the third serving MMNE to initiate a procedure for the UE for migrating the UE, so that the UE registers with the network element selection entity.

With reference to any possible implementation manner of the first aspect to the third possible implementation manner of the first aspect, in a fourth possible implementation manner of the first aspect, that the network element selection entity is selected by the serving base station device of the UE as the first serving MMNE of the UE includes:
if the UE does not notify the serving base station device of an identifier of a registered MMNE when the UE establishes a radio resource control RRC connection to the serving base station device, the network element selection entity is selected by the serving base station device of the UE as the first serving MMNE of the UE.

With reference to any possible implementation manner of the first aspect to the fourth possible implementation manner of the first aspect, in a fifth possible implementation manner of the first aspect, an interface protocol between the network element selection entity and the serving base station device is an interface protocol used between a device on an access network and a device used for mobility management on a core network.

With reference to any possible implementation manner of the first aspect to the fifth possible implementation manner of the first aspect, in a sixth possible implementation manner of the first aspect, the processing unit is specifically configured to:
send, to the UE by using the communications unit, a detach message used to indicate performing an implicit detach, where the detach message includes indication information indicating re-initiation of an attach procedure.

With reference to any possible implementation manner of the first aspect to the sixth possible implementation manner of the first aspect, in a seventh possible implementation manner of the first aspect, the second serving MMNE is an MMNE of a virtual operator or an MMNE of a traditional operator.

With reference to any possible implementation manner of the first aspect to the seventh possible implementation manner of the first aspect, in an eighth possible implementation manner of the first aspect, the user information includes at least one of the following: international mobile subscriber identity IMSI information, tracking area identification TAI information, access point name APN information, and subscription information.

With reference to any possible implementation manner of the first aspect to the eighth possible implementation manner of the first aspect, in a ninth possible implementation manner of the first aspect,
the network element selection entity is an MMNE; or,
the network element selection entity is a device that provides a virtual MMNE service; or,
the network element selection entity is a device that includes an MMNE; or,
the network element selection entity is a device that manages an MMNE or an MMNE pool.

According to a second aspect, a user equipment registration method is further provided, where the method includes:
acquiring, by a network element selection entity in a registration procedure in which a user equipment UE registers with the network element selection entity, user information of the UE, where the network element selection entity is selected by a serving base station device of the UE as a first serving mobility management network element MMNE of the UE;
determining, by the network element selection entity according to a correspondence between the user information and at least one candidate serving MMNE, a second serving MMNE selected for the UE;
allocating, by the network element selection entity to the UE, a globally unique temporary user equipment identity GUTI that belongs to the second serving MMNE;
instructing, by the network element selection entity, the UE to re-initiate an attach procedure, so that the UE attaches to the second serving MMNE according to the GUIT.

With reference to the second aspect, in a first possible implementation manner of the second aspect, the acquiring, by a network element selection entity in a registration procedure in which a user equipment UE registers with the network element selection entity, user information of the UE includes:
acquiring, by the network element selection entity in the registration procedure, the user information of the UE from the UE or a home subscriber server HSS.

With reference to the second aspect or the first possible implementation manner of the second aspect, in a second possible implementation manner of the second aspect, the determining, by the network element selection entity according to a correspondence between the user information and at least one candidate serving MMNE, a second serving MMNE selected for the UE includes:
determining, by the network element selection entity, the second serving MMNE from a plurality of candidate serving MMNEs according to a correspondence between the user information and the plurality of candidate serving MMNEs, and priorities of the plurality of candidate serving MMNEs.

With reference to any possible implementation manner of the second aspect to the second possible implementation manner of the second aspect, in a third possible implementation manner of the second aspect, the UE has registered with a third serving MMNE before the registration procedure, and the method further includes:
instructing, by the network element selection entity by using an element management system EMS, the third serving MMNE to initiate a procedure for the UE for migrating the UE, so that the UE registers with the network element selection entity.

With reference to any possible implementation manner of the second aspect to the third possible implementation manner of the second aspect, in a fourth possible implementation manner of the second aspect, that the network element selection entity is selected by the serving base station device of the UE as the first serving MMNE of the UE includes:
if the UE does not notify the serving base station device of an identifier of a registered MMNE when the UE establishes a radio resource control RRC connection to the serving base station device, the network element selection entity is selected by the serving base station device of the UE as the first serving MMNE of the UE.

With reference to any possible implementation manner of the second aspect to the fourth possible implementation manner of the second aspect, in a fifth possible implementation manner of the second aspect, an interface protocol between the network element selection entity and the serving base station device is an interface protocol used between a device on an access network and a device used for mobility management on a core network.

With reference to any possible implementation manner of the second aspect to the fifth possible implementation manner of the second aspect, in a sixth possible implementation manner of the second aspect, the instructing, by the network element selection entity, the UE to re-initiate an attach procedure includes:
sending, by the network element selection entity to the UE, a detach message used to indicate performing an implicit detach, where the detach message includes indication information indicating re-initiation of an attach procedure.

With reference to any possible implementation manner of the second aspect to the sixth possible implementation manner of the second aspect, in a seventh possible implementation manner of the second aspect, the second serving MMNE is an MMNE of a virtual operator or an MMNE of a traditional operator.

With reference to any possible implementation manner of the second aspect to the seventh possible implementation manner of the second aspect, in an eighth possible implementation manner of the second aspect, the user information includes at least one of the following: international mobile subscriber identity IMSI information, tracking area identification TAI information, access point name APN information, and subscription information.

With reference to any possible implementation manner of the second aspect to the eighth possible implementation manner of the second aspect, in a ninth possible implementation manner of the second aspect,
the network element selection entity is an MMNE; or,
the network element selection entity is a device that provides a virtual MMNE service; or,
the network element selection entity is a device that includes an MMNE; or,
the network element selection entity is a device that manages an MMNE or an MMNE pool.

Beneficial effects of the technical solutions provided in the embodiments of the present invention are as follows:
By selecting a serving MMNE for a UE according to a correspondence between user information of the UE and a candidate serving MMNE, selection of a specific MMNE for a UE having a particular feature can be implemented, which improves flexibility of selecting an MMNE compared with the prior art. By modifying a correspondence between user information of a UE and a candidate serving MMNE, an operator can select an MMNE for the UE according to different policies, which facilitates network management of the operator.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a network architecture involved in a user equipment registration method according to an embodiment of the present invention;
FIG. 2 is a schematic structural diagram of a network element selection entity according to another embodiment of the present invention;
FIG. 3 is a flowchart of a user equipment registration method according to another embodiment of the present invention;
FIG. 4 is a flowchart of a user equipment registration method according to another embodiment of the present invention; and
FIG. 5A and FIG. 5B are a flowchart of a user equipment registration method according to another embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

When an operator deploys a plurality of MMNEs on a network to offload users and services, a base station device needs to select an MMNE to serve a UE after the UE accesses the network. However, in the related technology, an MMNE is selected for a UE according to a weight of each MMNE included in a network. By using this method, a specific MMNE cannot be selected for a UE that has a particular feature. This method for selection of an MMNE is not flexible enough. For example, selection according to a weight of each MMNE may not implement selection of an MMNE that can meet a special service for the UE. For the second manner provided in the related technology, after a UE selects a network, an MMNE is selected from the selected network, so that the MMNE selection process needs to rely on the UE, causing that the MMNE selection process is difficult to manage for an operator, which does not meet requirements for flexible network management of the operator. In addition, in the second manner, because a base station needs to broadcast a network identifier through an air interface, the base station needs to be upgraded by using software, so that the base station supports a network sharing function. In addition, data configuration is added. Configuration workload is heavy because there is a huge number of base stations. In conclusion, to resolve the problem in the related technology, embodiments of the present invention provide a network element selection entity and a user equipment registration method.

Scenarios in which an MMNE is flexibly selected for an UE increase with the rapid development of mobile communications technologies. For example, the following scenarios are available.

Scenario 1: With the rapid development of wireless communications technologies, NFV (Network Function Virtualisation, network function virtualization) technologies have gradually become mature. After the NFV, most operators deploy one or more virtualized networks by using existing network hardware devices on the basis of deployed physical networks, and lease the virtualized networks to other network operators. In the embodiments of the present invention, operators who operate existing physical networks are referred to as traditional operators, and operators who operate virtualized networks are referred to as virtual operators. For example, for an LTE (Long Term Evolution, long term evolution) system, an operator usually constructs a vEPC (Virtual Evolved Packet Core, virtualized evolved packet core) network on the basis of an EPC (Evolved Packet Core, evolved packet core) network, and uses the vEPC to offload users and services on a live network. For example, users of the operator may be allocated to the EPC, where the EPC serves the users of the traditional operator, while the users of the MVNO (Mobile Virtual Network Operator, mobile virtual network operator) are allocated to the vEPC, where the vEPC serves users of the virtual operator. Therefore, after a virtualized network is deployed on the basis of a traditional network, after a UE accesses the network, a base station device needs to flexibly select an MMNE to serve the UE from MMNEs included in the EPC or the vEPC.

Scenario 2: For a non-overlaid virtualized network, for example, a network including an EPC only, an operator sometimes needs to allocate some MMNEs to process specific services. After the UE accesses the network, to enable the UE to complete a specific service, a base station needs to select a serving MMNE that can process the specific service for the UE.

To implement flexible selection of an MMNE, an embodiment of the present invention provides a network element selection entity and a user equipment registration method. The following provides details.

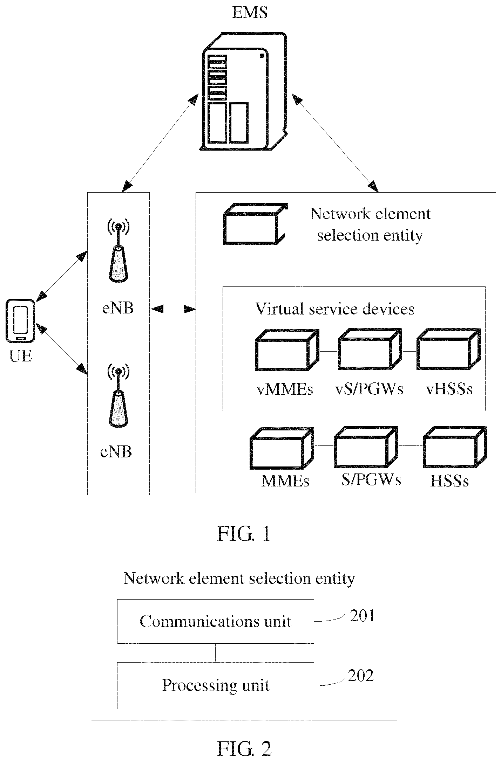

As shown in FIG. 1, FIG. 1 shows a schematic diagram of a network architecture involved in a user equipment registration method according to an embodiment of the present invention. The network architecture shown in FIG. 1 is an LTE system deployed with a virtualized network, where the LTE system includes at least one UE, at least one base station device (an evolved NodeB in the LTE system, which is evolved node B in English, eNB for short), a network element selection entity, at least one mobility management entity MME device, at least one SGW (serving network gateway, serving gateway), a PGW (packet data network gateway, packet data network gateway) device (where the SGW and the PGW may be integrated in one physical device, which is usually represented by SGW/PGW, and may also be represented by S/PGW), an HSS (Home Subscriber Server, home subscriber server) device, an element management system EMS device, and a virtual service device. An evolved packet core network (evolved packet core, EPC for short) of the LTE system includes the at least one MME, at least one S/PGW, and the HSS. The virtual service device provides a virtual EPC (vEPC for short), where the vEPC includes at least one virtual MME (vMME for short), at least one virtual S/PGW (vS/PGW for short), and at least one virtual HSS (vHSS for short), and both the EPC and the vEPC connects to the eNB. The EMS is a server that is capable of managing each network element that works properly. In addition, regardless of whether the EPC or the LTE system in which the EPC and vEPC co-exist, to provide better services and also to reduce a load of each network element, a plurality of MMEs or S/PGWs may be deployed on the EPC or the network that includes both the EPC and the vEPC, to form a POOL (pool). In FIG. 1, "s" after a label of each network element indicates that a network may include a plurality of such network elements, and a network element pool is formed among each type of network elements. For example, MMEs form an MME POOL, SGWs form an SGW POOL, PGWs form a PGW POOL, and the like. In the LTE system shown in FIG. 1, the network element selection entity is interconnected with the eNB, and the network element selection entity is interconnected with the EMS.

The network architecture shown in FIG. 1 is merely an example, this embodiment of the present invention also applies to other network scenarios such as 2G and 3G network architectures. For ease of description, in the present invention, an MME and an SGSN are collectively referred to as a mobility management network element (Mobility Management Network Element, MMNE for short), access network devices such as an eNB, an RNC, and a BSC that provide base station services are collectively referred to as base station devices, where a base station device that provides services for a UE is referred to as a serving base station device, and an MMNE that provides services for a UE is referred to as a serving MMNE.

In this embodiment of the present invention, a network element selection entity is mainly used for selecting an MMNE for a UE. To improve flexibility of selecting a serving MMNE, it may be considered that a correspondence between user information of the UE and a candidate serving MMNE be set to implement selection of different serving MMNEs for UEs having different features. Therefore, when selecting a serving MMNE for the UE, the network element selection entity may acquire the correspondence between the user information of the UE and the candidate serving MMNE to determine which MMNE is selected to serve the UE. The correspondence may be pre-configured on the network element selection entity, or may be stored on another network element, and the network element selection entity acquires the correspondence from the another NE. For example, a serving MMNE selection policy database may be set on the network element selection entity, where the database stores the correspondence between the user information and the candidate serving MMNE, or the serving MMNE selection policy database is set on another network element. The correspondence between the user information and the candidate serving MMNE may be stored in multiple manners. For example, the user information and an identifier of the candidate serving MMNE are stored in a row of record in a storage table. For another example, the user information and a type of the candidate serving MMNE are stored in a row of record in a storage table, and a correspondence between the type of the candidate serving MMNE and a plurality of candidate serving MMNEs is stored in another storage table. The manner of storing the correspondence between the user information and the candidate serving MMNE is not limited in this embodiment of the present invention.

Generally, when a UE is in an attach procedure or a location update procedure triggered by a change of a current serving MMNE, a base station device selects a serving MMNE for the UE, so that the UE registers with the serving MMNE. In this embodiment of the present invention, a procedure that enables a UE to register with a serving MMNE is referred to as a registration procedure in which the UE registers with the MMNE. Therefore, in this embodiment of the present invention, the attach procedure and the location update procedure are referred to as the registration procedure. A person skilled in the art should know that the registration procedure in which the UE registers with the MMNE is not limited to the attach procedure and the location update procedure, which is not limited in this embodiment of the present invention. Generally, a radio resource control (Radio Resource Control, RRC for short) connection needs to be established between the UE and the base station device before a registration procedure. During the process of establishing the RRC connection, if the UE sends information about an MMNE with which the UE previously registered to the base station device, the base station device preferentially selects the previously registered MMNE as the serving MMNE for the UE. If the UE does not send the information about a previously registered MMNE to the base station device, the base station device generally selects a serving MMNE for the UE by weight.

To prevent changes to the base station device, it may be considered that the foregoing registration procedure be used to achieve the objective of the present invention. To achieve this objective, an interface protocol between the base station device and the MMNE, such as the S1 interface protocol, the Gb interface protocol, or the Iu interface protocol, may be used as an interface protocol between the base station device and the network element selection entity. In this way, during the process of establishing the RRC connection, if the UE does not send the information about a previously registered MMNE to the base station device, when the base station device selects a serving MMNE for the UE, the network element selection entity has a chance to be selected as the serving MMNE for the UE, so that the network element selection entity may receive an attach request message or a location update message of the UE, and select a serving MMNE for the UE according to the correspondence between the user information and the candidate serving MMNE in the attach procedure and the location update procedure. Further, to improve the probability that the network element selection entity is selected as the serving MMNE, a weight of the network element selection entity may be set to 100%, and weights of other MMNEs may be set to 0.

In a case that the UE has not registered with another MMNE previously, during the process of establishing the RRC connection, the UE does not send information about a previously registered MMNE to the base station device. Therefore, the foregoing method may be used to implement registration of the UE to the network element selection entity, to achieve the objective of the present invention. In a case that the UE has registered with another MMNE, it may be considered to instruct the UE not to add information about a registered MMNE during the process of establishing the RRC connection, to implement registration of the UE to the network element selection entity. For example, on an LTE network, a user equipment context release command message carrying a cause value Load Balancing TAU Required may be sent. After receiving the message, a UE initiates a location update procedure, and does not add information about a registered MMNE when the UE establishes an RRC connection with a base station device.

In conclusion, by using the foregoing registration procedure, the network element selection entity may be used as the serving MMNE (referred to as a first serving MMNE herein), so that the UE registers with the network element selection entity, and then the network element selection entity selects a serving MMNE (referred to as a second MMNE herein) for the UE according to the correspondence between user information and a candidate serving MMNE.

After the network element selection entity selects (may also be referred to as determines) the second MMNE for the UE, registration of the UE to the second MMNE may be implemented by using a globally unique user equipment temporary identification GUTI allocation mechanism and an implicit detach mechanism.

After the network element selection entity selects the second MMNE for the UE, the network element selection entity acquires GUTI resources that belong to the second MMNE, selects a GUTI from the GUTI resources, and allocates the GUTI to the UE by using an attach procedure or a location update procedure. A GUTI that belongs to the second MMNE includes an identifier of the second MMNE. After receiving the allocated GUTI, the UE considers that the UE has registered with the second MMNE. Then, the network element selection entity may initiate an implicit detach for the UE after the attach procedure or the location update procedure. When re-establishing an RRC connection to the base station device, the UE sends, to the base station device, an identifier of the second MMNE with which the UE has previously registered, and the base station device selects, according to the identifier, the second MMNE as the serving MMNE for the UE, to implement registration of the UE to a serving MMNE selected by the network element selection entity for the UE.

Further, to avoid a conflict resulting from that a GUTI allocated by the second MMNE is the same as a GUTI that belongs to the second MMNE and is allocated by the network element selection entity, during specific implementation, GUTI resources that can be allocated by the second MMNE are different from GUTI resources that belong to the second MMNE and can be allocated by the network element selection entity.

FIG. 1 only illustrates a specific structure in the LTE system, and the foregoing content merely uses that a method of selecting an MMNE for a UE is applicable to the LTE system as an example. However, during specific implementation, the method provided in this embodiment of the present invention may also apply to a 2G/3G system. Because the method provided in this embodiment of the present invention also applies to various systems such as a 2G/3G system, an MMNE involved in this embodiment of the present invention may be an MME, an SGSN, or the like.

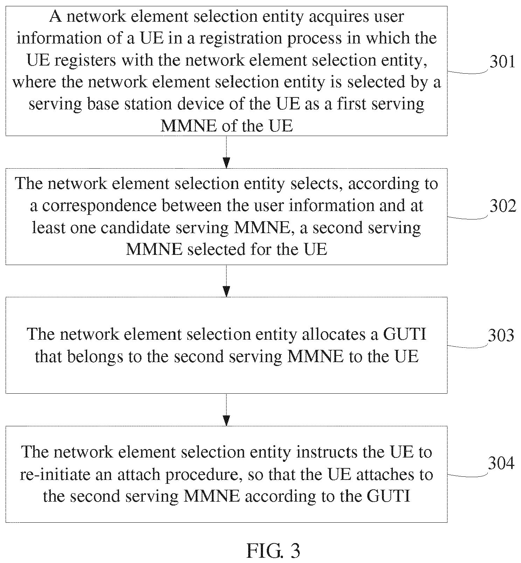

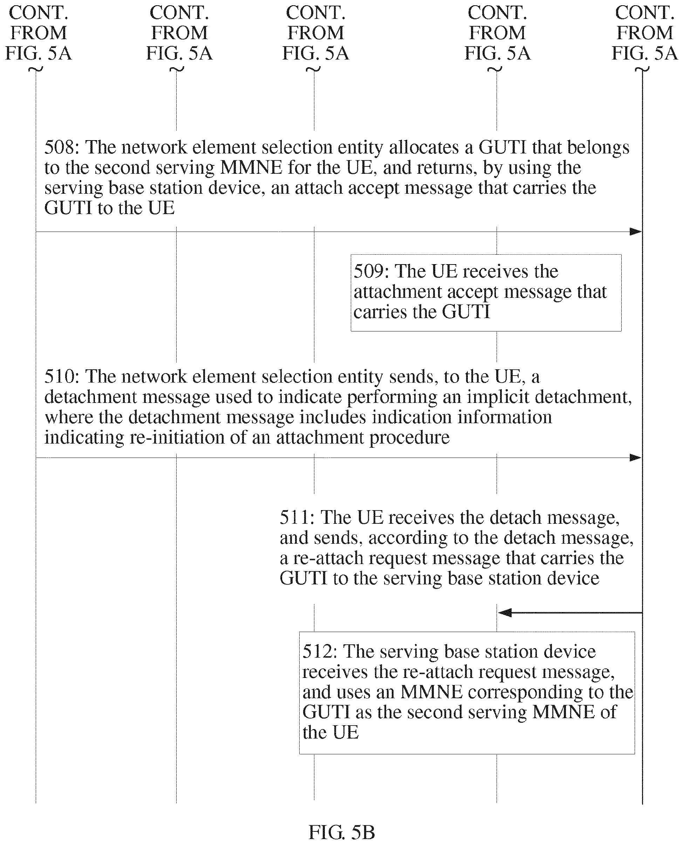

FIG. 2 shows a network element selection entity according to an exemplary embodiment, where the network element selection entity is configured to execute functions executed by the network element selection entity in any embodiment of the embodiments shown in FIG. 3 to FIG. 5A and FIG. 5B. The network element selection entity is selected by a serving base station device of a UE as a first serving MMNE of the UE. Referring to FIG. 2, the network element selection entity includes:
a communications unit 201, configured to receive or send information., where:
   a specific structure of the communications unit is not limited in this embodiment of the present invention. During specific implementation, the communications unit 201 includes but is not limited to a network adapter, an optical fiber group, and a serial port communications module; and
   a processing unit 202, configured to:
      in a registration procedure in which the UE registers with the network element selection entity, acquire user information of the UE by using the communications unit 201;
      determine, according to a correspondence between the user information and at least one candidate serving MMNE, a second serving MMNE selected for the UE;
      allocate, to the UE by using the communications unit 201, a GUTI that belongs to the second serving MMNE;
      instruct, by using the communications unit 201, the UE to re-initiate an attach procedure, so that the UE attaches to the second serving MMNE according to the GUIT.

Optionally, the processor 202 is specifically configured to:
in the registration procedure, acquire, by using the communications unit 201, the user information of the UE from the UE or a home subscriber server HSS.

Optionally, the processor 202 is specifically configured to:
determine the second serving MMNE from a plurality of candidate serving MMNEs according to a correspondence between the user information and the plurality of candidate serving MMNEs, and priorities of the plurality of candidate serving MMNEs.

Optionally, the processing unit 202 is further configured to:
if the UE has registered with a third serving MMNE before the registration procedure, instruct, by using the communications unit 201, the element management system EMS to instruct the third serving MMNE to initiate a procedure for the UE for migrating the UE, so that the UE registers with the network element selection entity.

Optionally, that the network element selection entity is selected by the serving base station device of the UE as the first serving MMNE of the UE includes:
if the UE does not notify the serving base station device of an identifier of a registered MMNE when the UE establishes a radio resource control RRC connection to the serving base station device, the network element selection entity is selected by the serving base station device of the UE as the first serving MMNE of the UE.

Optionally, an interface protocol between the network element selection entity and the serving base station device is an interface protocol used between a device on an access network and a device used for mobility management on a core network.

Optionally, the processor 202 is specifically configured to:
send, to the UE by using the communications unit 201, a detach message used to indicate performing an implicit detach, where the detach message includes indication information indicating re-initiation of an attach procedure.

Optionally, the second serving MMNE is an MMNE of a virtual operator or an MMNE of a traditional operator.

Optionally, the user information includes at least one of the following: IMSI (International Mobile Subscriber Identification Number, international mobile subscriber identity) information, TAI (Tracking Area Identification, tracking area identification) information, APN (Access Point Name, access point name) information, and subscription information.

Optionally, the network element selection entity is an MMNE; or,
the network element selection entity is a device that provides a virtual MMNE service; or,
the network element selection entity is a device that includes an MMNE; or,
the network element selection entity is a device that manages an MMNE or an MMNE pool.

In this embodiment of the present invention, a specific structure of the processing unit 202 may be of various types, for example, may be a general purpose processor, a dedicated processor, a processing circuit, or the like.

For details about a working process of the network element selection entity, refer to the following embodiments shown in FIG. 3 to FIG. 5A and FIG. 5B, which is not described herein again.

The network element selection entity provided in this embodiment of the present invention selects a serving MMNE for a UE according to a correspondence between user information of the UE and a candidate serving MMNE, which can implement selection of a specific MMNE for a UE having a particular feature, thereby improving flexibility of selecting an MMNE compared with the prior art. By modifying a correspondence between user information of a UE and a candidate serving MMNE, an operator can select an MMNE for the UE according to different policies, which facilitates network management of the operator.

With reference to the network architecture shown in FIG. 1 and the network element selection entity shown in FIG. 2, FIG. 3 provides a flowchart of a user equipment registration method according to an exemplary embodiment. Referring to FIG. 3, the procedure of the method provided in this embodiment includes:
301: A network element selection entity acquires user information of a UE in a registration procedure in which the UE registers with the network element selection entity, where the network element selection entity is selected by a serving base station device of the UE as a first serving MMNE of the UE.

302: The network element selection entity selects, according to a correspondence between the user information and at least one candidate serving MMNE, a second serving MMNE selected for the UE.

303: The network element selection entity allocates a GUTI that belongs to the second serving MMNE to the UE.

304: The network element selection entity instructs the UE to re-initiate an attach procedure, so that the UE attaches to the second serving MMNE according to the GUTI.

Optionally, that a network element selection entity acquires user information of a UE in a registration procedure in which the UE registers with the network element selection entity includes:
the network element selection entity acquires the user information of the UE from the UE or a home subscriber server HSS in the registration procedure.

Optionally, that the network element selection entity selects, according to a correspondence between the user information and at least one candidate serving MMNE, a second serving MMNE selected for the UE includes:
the network element selection entity selects the second serving MMNE from a plurality of candidate serving MMNEs according to a correspondence between the user information and the plurality of candidate serving MMNEs, and priorities of the plurality of candidate serving MMNEs.

Optionally, the UE has registered with a third serving MMNE before the registration procedure, and the method further includes:
instructing, by the network element selection entity by using an element management system EMS, the third serving MMNE to initiate a procedure for the UE for migrating the UE, so that the UE registers with the network element selection entity.

Optionally, that the network element selection entity is selected by the serving base station device of the UE as the first serving MMNE of the UE includes:
if the UE does not notify the serving base station device of an identifier of a registered MMNE when the UE establishes a radio resource control RRC connection to the serving base station device, the network element selection entity is selected by the serving base station device of the UE as the first serving MMNE of the UE.

Optionally, an interface protocol between the network element selection entity and the serving base station device is an interface protocol used between a device on an access network and a device used for mobility management on a core network.

Optionally, that the network element selection entity instructs the UE to re-initiate an attach procedure includes:
the network element selection entity sends, to the UE, a detach message used to indicate performing an implicit detach, where the detach message includes indication information indicating re-initiation of the attach procedure.

Optionally, the second serving MMNE is an MMNE of a virtual operator or an MMNE of a traditional operator.

Optionally, the user information includes at least one of the following: IMSI information, TAI information, APN information, and subscription information.

Optionally, the network element selection entity is an MMNE; or,
the network element selection entity is a device that provides a virtual MMNE service; or,
the network element selection entity is a device that includes an MMNE; or,
the network element selection entity is a device that manages an MMNE or an MMNE pool.

According to the method provided in this embodiment of the present invention, a serving MMNE is selected for a UE according to a correspondence between user information of the UE and a candidate serving MMNE, which can implement selection of a specific MMNE for a UE having a particular feature, thereby improving flexibility of selecting an MMNE compared with the prior art. By modifying a correspondence between user information of a UE and a candidate serving MMNE, an operator can select an MMNE for the UE according to different policies, which facilitates network management of the operator.

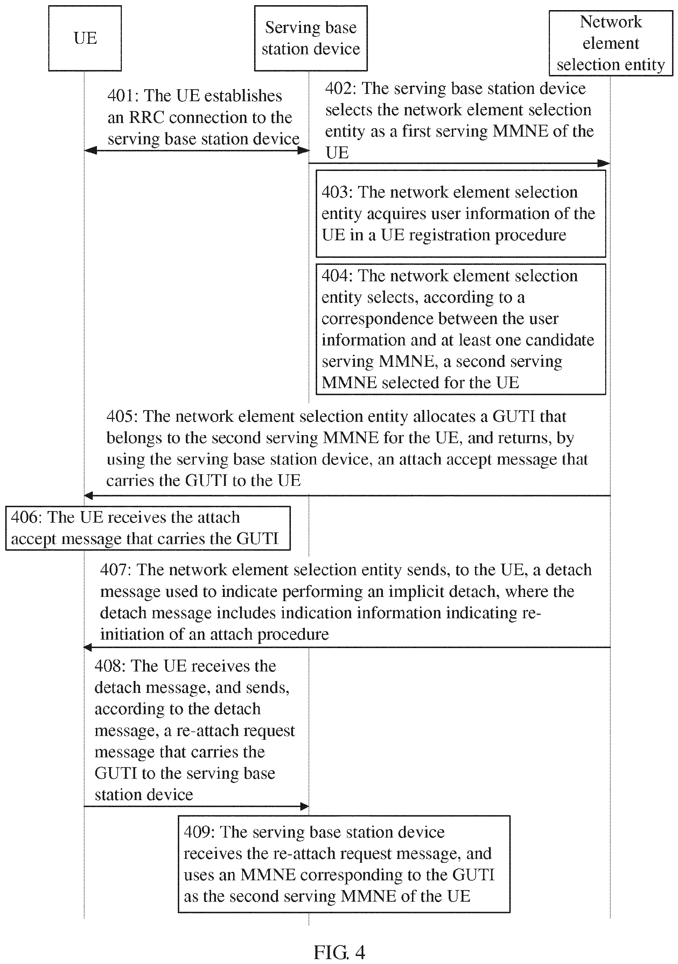

FIG. 4 shows a flowchart of a user equipment registration method according to an exemplary embodiment. This embodiment uses an example in which a network element selection entity selects a serving MMNE for a UE corresponding to a newly-defined user to describe the method provided in this embodiment of the present invention in detail. The network element selection entity is selected by a serving base station device as a first serving MMNE of the UE. Referring to FIG. 4, the procedure of the method provided in this embodiment includes:
401: The UE establishes an RRC connection to the serving base station device.

To trigger the UE to access a core network, the UE needs to establish the RRC connection to the serving base station device. The process of establishing the RRC connection between the UE and the serving base station device is not specifically limited in this embodiment of the present invention. During specific implementation, the process of establishing the RRC connection between the UE and the serving base station device is as follows: The UE sends an RRC connection establishment request to the serving base station device; the serving base station device receives the RRC connection establishment request, and after determining to accept the RRC connection from the UE, returns an RRC connection establishment response to the UE; the UE receives the RRC connection establishment response, and responds to the serving base station device with an RRC connection complete message, to implement establishment of the RRC connection to the serving base station device.

Generally, a UE that has camped on a network notifies a serving base station device of an identifier of a registered MMNE, that is, an identifier of a RegisteredMMNE, in an RRC connection complete message. In this case, the serving base station device selects, according to the identifier of the registered MMNE, an MMNE corresponding to the identifier of the registered MMNE as an MMNE serving the UE. However, this embodiment of the present invention is specific to a UE corresponding to a newly-defined user, that is, a UE that does not camp on any MMNE; therefore, the UE does not notify the serving base station device of the identifier of the registered MMNE in the RRC connection complete message in the phase of establishing the RRC connection.

This embodiment of the present invention does not limit specific types of the UE and the serving base station device. During specific implementation, the UE includes but is not limited to a tablet computer, a mobile phone, a PC (Personal Computer, personal computer), and the like. The serving base station device includes but is not limited to an RNC (Radio Network Controller, radio network controller), a BSC (Base Station Controller, base station controller), eNB, and the like.

402: The serving base station device selects the network element selection entity as the first serving MMNE of the UE.

In this embodiment of the present invention, the UE does not notify the serving base station device of an identifier of a registered MMNE when the UE establishes an RRC connection to the serving base station device. Therefore, after the UE establishes the RRC connection to the serving base station device, to select a serving MMNE for the UE, the serving base station device needs to establish a connection to a network element that can allocate an MMNE to the UE, to ensure that the network element may allocate the MMNE to the UE. However, to resolve a problem in the prior art that selection of a target MMNE is not flexible enough because the serving base station device directly connects to an MMNE randomly according to a weight of each MMNE on the network, the method provided in this embodiment of the present invention presets a network element selection entity. If the UE does not notify the serving base station device of the identifier of the registered MMNE when the UE establishes the RRC connection to the serving base station device, the serving base station device selects the network element selection entity as the first serving MMNE for the UE, and the network element selection entity determines, according to a prestored correspondence between user information and at least one candidate serving MMNE, a second serving MMNE selected for the UE.

A specific structure of the network element selection entity is not limited in this embodiment of the present invention. During specific implementation, the network element selection entity may be an entity that includes at least one MMNE. Optionally, the network element selection entity may further be an entity that includes at least one S/PGW or the like. In addition, to improve reliability of services of the network element selection entity, the network element selection entity may include a plurality of MMNEs, which form an MMNE pool (MMNE POOL). In addition, when the network element selection entity includes a plurality of MMNEs, a priority may be allocated for each MMNE. In this case, if the UE does not notify the serving base station device of the identifier of the registered MMNE when the UE establishes the RRC connection to the serving base station device, the serving base station device connects to an MMNE according to the priority of each MMNE in the network element selection entity, so that the MMNE executes allocation of the MMNE to the UE. Specific content of the priority is not limited in this embodiment of the present invention, for example, may be a weight allocated to each MMNE, where a higher weight indicates a higher priority; the priority may also be determined according to a load of each MMNE, where a lighter load indicates a higher priority, and the like.

In addition, the network element selection entity includes at least one MMNE; therefore, the network element selection entity may be an entity deployed on the at least one MMNE on a live network, or an entity that includes at least one MMNE and is dedicated to executing functions of the network element selection entity provided in this embodiment of the present invention. In addition, with reference to a type of a network included in the network, if the network includes both a traditional network and a virtual network, for example, an EPC and a vEPC, the network element selection entity may also be a device that provides virtual MMNE services. Certainly, the network element selection entity may also be a device that manages an MMNE or an MMNE pool, and the like. In addition, because the network element selection entity is an MMNE-related device, the network element selection entity may be integrated with an MMNE, or be independent of MMNEs, which is not specifically limited in this embodiment of the present invention. A specific form of the network element selection entity is not limited in this embodiment of the present invention. During specific implementation, the network element selection entity may be embedded, or based on a cloud network, and the like.

In addition, an interface protocol between the network element selection entity and the serving base station device is not specifically limited in this embodiment of the present invention. During specific implementation, it only needs to be ensured that the interface protocol is an interface protocol between a device on an access network and a device used for mobility management on a core network. For example, the interface protocol may be the S1 interface protocol, the Gb interface protocol, the Iu interface protocol, or the like. The S1 interface is an interface between an evolved radio access network and an evolving core network in the LTE system; the Gb interface is an interface between an SGSN and a BSS (Base Station Subsystem, base station subsystem); the Iu interface is responsible for signaling interworking between a core network and an RNC.

The manner in which the serving base station device selects the network element selection entity as the first serving MMNE of the UE is not specifically limited in this embodiment of the present invention. During specific implementation, if the network includes a plurality of MMNEs, and an MMNE functions as the network element selection entity, a weight of the MME that functions as the network element selection entity is set to 100%, and weights of other MMNEs is set to 0% when the EMS presets the network. Therefore, if the UE does not notify the serving base station device of the identifier of the registered MME when the UE establishes the RRC connection to the serving base station device, the serving base station device automatically connects to the network element selection entity because the weight of the network element selection entity is set to 100%, and the network element selection entity is used as the first serving MMNE. Certainly, if the UE does not notify the serving base station device of the identifier of the registered MMNE when the UE establishes the RRC connection to the serving base station device, the EMS may also use another method to enable the serving base station device to select the network element selection entity as the first serving MMNE, which is not specifically limited in this embodiment of the present invention.

Further, to trigger the network element selection entity to select the second serving MMNE for the UE, after the serving base station device selects the network element selection entity as the first serving MMNE of the UE, an initial user message may be sent to the network element selection entity to trigger a process of selecting the second serving MMNE for the UE. The manner in which the serving base station sends the initial user message to the network element selection entity is not specifically limited in this embodiment of the present invention.

403: The network element selection entity acquires user information of the UE in a UE registration procedure.

To allocate the second serving MMNE to the UE, the second element selection entity needs to acquire the user information of the UE in the UE registration procedure, to ensure that the second serving MMNE may be selected for the UE according to the user information. This embodiment of the present invention is applicable to a newly-accessed user; therefore, the registration procedure corresponds to an attach procedure.

Specific content of the user information is not specifically limited in this embodiment of the present invention. During specific implementation, the user information includes but is not limited to at least one of the following: IMSI information, TAI information, APN information, and subscription information.

The manner in which the network element selection entity acquires the user information of the UE in the UE registration procedure includes but is not limited to: The network element selection entity acquires the user information of the UE in the UE registration procedure from the UE or an HSS. Specifically, because the newly-accessed UE establishes a connection to the MMNE by using the attach procedure, the network element selection entity may acquire the user information of the UE in the attach procedure. For example, when the serving base station device sends the initial user message to the network element selection entity to trigger a process of selecting, by the network element selection entity, the second serving MMNE, because the initial user message includes an attach request, and the attach request generally includes the user information such as an IMSI and an APN, the network element selection entity may acquire the user information of the UE by receiving the initial user message and parsing the initial user message. In addition, the attach procedure in which the UE establishes the connection to the MMNE generally includes an attach bearer process, and during the attach bearer process, the HSS may return subscription information. Therefore, the network element selection entity may acquire the user information of the UE by receiving the subscription information returned by the HSS. Certainly, the network element selection entity may also acquire the user information of the UE in another manner in the UE registration procedure, which is not specifically limited in this embodiment of the present invention.

404: The network element selection entity selects, according to a correspondence between the user information and at least one candidate serving MMNE, the second serving MMNE selected for the UE.

The network element selection entity prestores a correspondence between user information and at least one candidate serving MMNE, and the correspondence between user information and at least one candidate serving MMNE is specific content that is flexibly set by an operator according to requirements of network control and is of the serving MMNE allocated to the UE according to the user information of the UE. The prestored correspondence between user information and at least one candidate serving MMNE may be stored locally in the network element selection entity, or may be stored in a cloud, which is not specifically limited in this embodiment of the present invention.

The operator may flexibly set the correspondence between user information and at least one candidate serving MMNE according to the requirements of network control. In this case, the correspondence between a UE whose user information is of a specific type and some MMNEs or an MMNE may be established according to the requirements of network control. Because the correspondence between user information and a candidate serving MMNE may be set as required, a UE having a specific feature may access a specific MMNE, which not only facilitates control on a process of selecting an MMNE, but also implements pre-allocation of some MMNEs for processing of a specific service. Therefore, when it is determined according to the user information that some UEs need to process a specific service, it may be directly controlled that the MMNEs that can process the specific service are selected for the UEs, thereby ensuring that a serving MMNE is selected for a UE more flexibly.

For example, if the network includes only an EPC, a correspondence between user information of a UE of a particular type and a candidate serving MMNE that can process a specific service may be established.

For another example, if the LTE system includes both an EPC and a vEPC, and the operator want to control users of a traditional operator to select the EPC and users of a virtual operator to select the vEPC, a correspondence between MMNEs included in the EPC and user information of users of the traditional operator and a correspondence between MMEs included in the vEPC and user information of users of the virtual operator may be established when the correspondence between user information and at least one candidate serving MMNE is set. Therefore, when a UE of a user of the traditional operator accesses the network, the UE may automatically connect to an MMNE included in the EPC because user information of the UE of the user of the traditional operator is corresponding to the MMNE included in the EPC.

A manner in which the network element selection entity determines, according to the correspondence between user information and at least one candidate serving MMNE, the second serving MME selected for the UE is not specifically limited in this embodiment of the present invention. During specific implementation, the user information may include rich content; therefore, the network element selection entity may perform maximum matching between specific content included in the user information and user information in the correspondence between user information and at least one candidate serving MMNE to implement selection of the second serving MMNE. In addition, for the network element selection entity that includes a plurality of MMNEs, a priority may be set for each MMNE. Therefore, that the network element selection entity determines, according to the correspondence between user information and at least one candidate serving MMNE, the second serving MME selected for the UE includes but is not limited to: the network element selection entity selects the second serving MMNE from a plurality of candidate serving MMNEs according to a correspondence between the user information and the plurality of candidate serving MMNEs, and priorities of the plurality of candidate serving MMNEs. Specific content of the priorities is not limited in this embodiment of the present invention. During specific implementation, the priority includes but is not limited to a preset weight of each candidate serving MMMNE or a loading status of each MMNE, and the like.

In addition, because the user information may include much content, the preset correspondence between user information and a candidate serving MMNE in the correspondence between user information and at least one candidate serving MMNE may also include rich content. For example, for the network in which the EPC and the vEPC coexist, the preset correspondence between user information and a candidate serving MMNE may include a correspondence between the user information and a network type. For example, it may be preset that some candidate serving MMNEs correspond to the EPC; or it may be preset that some candidate serving MMNEs correspond to the vEPC. Therefore, the determining the second serving MMNE selected for the UE according to the correspondence between user information and at least one candidate serving MMNE includes but is not limited to: determining, according to the user information, a type of network to which the UE belongs, and selecting the second serving MMNE for the UE in MMNEs included in the type of network.

Specifically, if the type of network corresponding to the user information is the EPC, the second serving MMNE is an MMNE of the traditional operator; therefore, the second serving MMNE is selected for the UE from MMNEs of the traditional operator. If the type of network corresponding to the user information is the vEPC, the second serving MMNE is an MMNE of a virtual operator; therefore, the second serving MMNE is selected for the UE from MMNEs of the virtual operator. For example, if it is determined that the type of network corresponding to the user information is the vEPC, the second serving MMNE is selected for the UE from all MMEs included in the vEPC, and the second serving MMNE is an MMNE of the virtual operator.

To facilitate description of the foregoing process of determining, by the network element selection entity, the second serving MMNE selected for the UE according to the correspondence between user information and at least one candidate serving MMNE, the following uses a process during which the network element selection entity determines the second serving MMNE selected for the UE according to the correspondence between user information and at least one candidate serving MMNE when the user information is an IMSI as an example.

IMSI=MCC+MNC+ABCD+XXXXXX, where an IMSI prefix may be set as MCC+MNC+ABCD. As shown in Table 1, Table 1 shows a correspondence between an IMSI prefix and a candidate MMNE corresponding to the IMSI that includes the IMSI prefix in a correspondence between user information and at least one candidate serving MMNE.

**Table 1**

| **IMSI prefix** | **Candidate serving MMNE** | **MME weight** |
|---|---|---|
| MCC+MNC+ABCD | MME3 | 40%, corresponding to design capacity of MMNE3 |
| MCC+MNC+ABCD | MME4 | 60%, corresponding to design capacity of MMNE3 |

In the correspondence between user information and at least one candidate serving MMNE shown in Table 1, candidate serving MMNEs corresponding to the prefix MCC+MNC+ABCD include MMNE3 and MMNE4; a preset weight of MMNE3 is 40%, and a weight of MMNE4 is 60%; it may be seen that a priority of MMNE3 is higher than a priority of MMNE4. Therefore, MMNE4 is selected as the second serving MMNE for the UE.

For another example, the user information is a TAI, and a correspondence between a TAI and a candidate serving MMNE set in the correspondence between user information and at least one candidate serving MMNE is shown in Table 2.

**Table 2**

| **TAI** | **Candidate serving MMNE** |
|---|---|
| Beijing | MMNE1 |
| Shanghai | MMNE2 |

It may be known from Table 2 that when a TAI of the UE indicates that the user is a user in Beijing, MMNE1 is used as the second serving MMNE of the UE according to the correspondence between user information and at least one candidate serving MMNE.

For another example, the user information is an APN, and a correspondence between an APN and a candidate serving MMNE set in the correspondence between user information and at least one candidate serving MMNE is shown in Table 3.

**Table 3**

| **APN** | **Candidate serving MMNE** |
|---|---|
| Voice service | MMNE5 |
| Video service | MMNE6 |

It may be known from Table 3 that when an APN of the UE indicates that the user is a voice service user, MMNE5 is used as the second serving MMNE of the UE according to the correspondence between user information and at least one candidate serving MMNE.

Certainly, in the foregoing examples, the IMSI, the APN, and the TAI are separately used as user information for illustration. However, during specific implementation, specific content included in the user information may be combined to allocate the second serving MMNE for the UE. For example, if the user information includes both the IMSI and the APN, the network element selection entity needs to allocate, according to a combination of the IMSI and the APN, the second serving MMNE for the UE. A manner of allocating the second serving MMNE according to a combination of various types of user information included in the user information is not further described by using examples herein.

In addition, because the user information further includes the subscription information returned by the HSS; therefore, an MMNE corresponding to the user information may also be acquired according to a correspondence between the subscription information returned by the HSS and the at least one candidate serving MMNE, to use the MMNE corresponding to the user information as the second serving MMNE. A manner of determining the second serving MMNE according to the subscription information returned by the HSS is similar to the manner of determining the second serving MMNE according to the IMSI, the TAI, or the APN, which is not further described by using example herein.

405: The network element selection entity allocates a GUTI that belongs to the second serving MMNE for the UE, and returns, by using the serving base station device, an attach accept message that carries the GUTI to the UE.

After the network element selection entity determines the second serving MMNE for the UE, the network element selection entity needs to notify the UE of the MMNE allocated to the UE, so that the UE may attach to the second serving MMNE subsequently. GUTI = GUMMEI + M-TMSI, where GUMMEI is a globally unique MMNE identifier; therefore, an MMNE may be uniquely identified by using the GUTI. To enable the UE to identify the MMNE allocated by the network element to the UE, the network element selection entity allocates a GUTI of the second serving MMNE to the UE, adds the GUTI in an attach accept message, and returns the message to the UE by using the serving base station device.

A manner in which the network element selection entity allocates the GUTI that belongs to the second serving MMNE to the UE is not specifically limited in this embodiment of the present invention. During specific implementation, a GUTI may be randomly selected from a number segment corresponding to the second serving MMNE. GUTI number segments corresponding MMEs may also be prioritized in advance. Therefore, when a GUTI of the second serving MMNE is allocated, the GUTI may be selected according to a sequence in which the UE accesses the network, and the like.

It should be noted that, the correspondence between user information and at least one candidate serving MMNE also stores allocatable GUTI number segments corresponding to MMNEs. Therefore, when a GUTI that belongs to the second serving MMNE is allocated to the UE, the GUTI may also be selected from the corresponding allocatable GUTI number segments. As shown in Table 4, Table 4 shows a table listing MMNEs and corresponding allocatable GUTI number segments that are stored in the correspondence between a type of user information and at least one candidate serving MMNE.

**Table 4**

| **Candidate serving MMNE** | **Allocatable GUTI number segment** |
|---|---|
| MMNE3 | GUTIm....GUTIn |
| MMNE4 | GUTIo....GUTIp |

In addition, a manner of returning, by using the serving base station device, the attach accept message carrying the GUTI to the UE is not specifically limited in this embodiment of the present invention. During specific implementation, the attach accept message carrying the GUTI may be returned to the UE through a channel of the serving base station device. The attach accept message may be corresponding to message No. 17 in section 5.3.2.1 of the protocol 3GPP TS 23.401.

406: The UE receives the attach accept message that carries the GUTI.

A manner in which the UE receives the attach accept message carrying the GUTI is not specifically limited in this embodiment of the present invention.

By using the foregoing steps, the second serving MMNE that may correspond to the user information of the UE is allocated to the UE. However, during specific implementation, to enable the allocated second serving MMNE to properly serve the UE, it also needs to be ensured that the UE establishes a connection to the second serving MMNE, that is, the UE attaches to the second serving MMNE. Therefore, the following steps further need to be performed.

407: The network element selection entity sends, to the UE, a detach message used to indicate performing an implicit detach, where the detach message includes indication information indicating re-initiation of an attach procedure.

This step is a specific implementation method that the network element selection entity instructs the UE to re-initiate an attach procedure. Generally, the UE establishes a connection to the MMNE by using a re-attach procedure. To enable the UE to attach to the second serving MMNE, the network element selection entity may send, to the UE, a detach message used to indicate performing an implicit detach, to instruct, in the detach message, the UE to initiate a re-attach procedure.

There may be various manners in which the network element selection entity sends, to the UE, the detach message used to indicate performing an implicit detach. During specific implementation, after step 406, the network element selection entity may immediately send, to the UE, the detach message used to indicate performing an implicit detach, to instruct the UE to initiate the re-attach procedure, or may send, to the UE after a period of time, the detach message used to indicate performing an implicit detach, to instruct the UE to initiate the re-attach procedure. However, to enable the UE to successfully connect to the second serving MMNE, the detach message may be sent immediately.

In addition, there may be various manners of carrying indication information of a re-attach procedure in the detach message. During specific implementation, the manners include but are not limited to setting an attach type in the detach message to re-attach. For details about the implicit detach procedure, refer to section 5.3.8.3 of the protocol 3GPP TS 23.401.

408: The UE receives the detach message, and sends, according to the detach message, a re-attach request message that carries the GUTI to the serving base station device.

This step is a specific implementation method for the UE to attach to the second serving MMNE. After the UE receives the detach message, because the detach message carries a re-attach indication, the UE sends, to the serving base station device according to the re-attach indication, a re-attach request message carrying the GUTI to trigger a re-attach procedure, to trigger the UE to attach to the second serving MMNE. A manner in which the UE receives the detach message, and a manner in which the UE sends, to the serving base station device according to the detach message, the re-attach request message carrying the GUTI are not specifically limited in this embodiment of the present invention.

409: The serving base station device receives the re-attach request message, and uses an MMNE corresponding to the GUTI as the second serving MMNE of the UE.

GUTI = GUMMEI + M-TMSI, and GUMMEI is a globally unique MMNE identifier; therefore, after receiving the re-attach request message, the serving base station device selects the MMNE corresponding to the GUTI as the second serving MMNE of the UE.

According to the method provided in this embodiment of the present invention, a serving MMNE is selected for a UE according to a correspondence between user information of the UE and a candidate serving MMNE, which can implement selection of a specific MMNE for a UE having a particular feature, thereby improving flexibility of selecting an MMNE compared with the prior art. For a newly-accessed UE, after the UE accesses a network, the UE may be allocated to a preset MMNE corresponding to the user information of the UE, which not only facilitates network management of the operator, but also implements selection of an MMNE for the UE easily and efficiently.

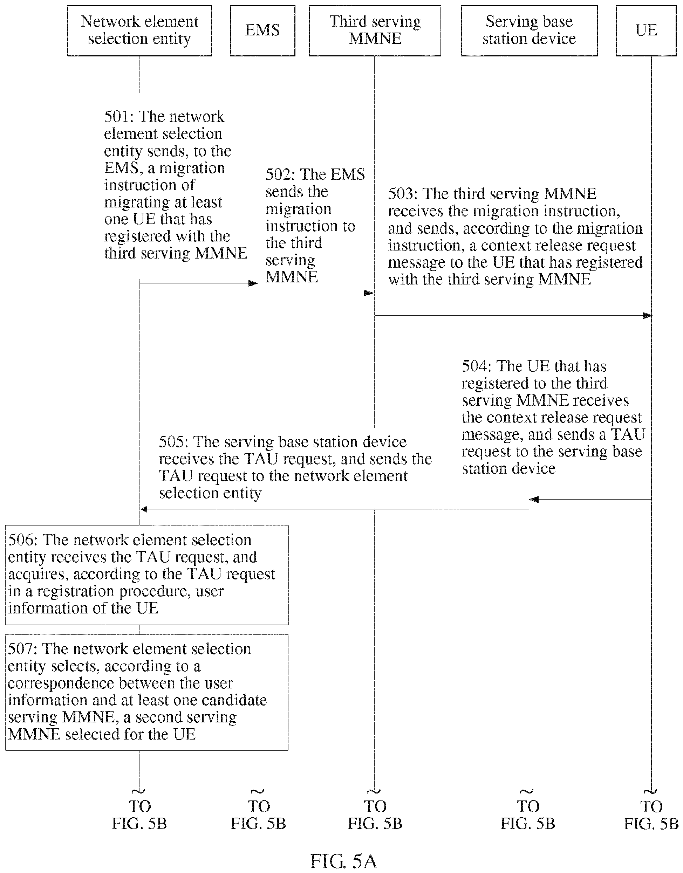

FIG. 5A and FIG. 5B show a flowchart of a user equipment registration method according to an exemplary embodiment. In this embodiment, the method according to this embodiment of the present invention is described in detail by using an example in which a network element selection entity initiates migration of at least one UE that has registered with a third serving MMNE, reselects a second serving MMNE for the at least one UE that has registered with the third serving MMNE. Referring to FIG. 5A and FIG. 5B, the procedure of the method provided in this embodiment includes:
501: The network element selection entity sends, to an EMS, a migration instruction of migrating at least one UE that has registered with the third serving MMNE.

This step to step 505 are a specific implementation method in which the network element selection entity instructs, by using the EMS for the at least one UE that has registered with the third serving MMNE, the third serving MMNE to initiate a process of migrating the at least one UE. It should be noted that, an MMNE with which at least one UE to be migrated registers may be a same MMNE, or may be different MMNEs. For ease of description, in this embodiment, that the at least one UE to be migrated registers with the third MMNE is used as an example for description.

With reference to the schematic diagram of the network architecture shown in FIG. 1 and specific content of the foregoing embodiments, after the network element selection entity is introduced, the network element selection entity selection may select, according to a preset correspondence between user information and at least one candidate serving MMNE, a second serving MMNE for the UE. Therefore, when it is required to migrate one or some UEs that have registered with the third serving MMNE, the network element selection entity may initiate an MMNE migration process of migrating the UE that has registered with the third serving MMNE, that is, change the serving MMNE of the UE that has registered with the third serving MMNE, to reselect the second serving MMNE for the at least one UE that has registered with the third serving MMNE. Triggering initiation of the MMNE migration process by the network element selection entity includes but is not limited to sending, to the EMS, a migration instruction for migrating at least one UE that has registered with the third serving MMNE. A manner in which the network element selection entity sends, to the EMS, the migration instruction for migrating at least one UE that has registered with the third serving MMNE is not specifically limited in this embodiment of the present invention. During specific implementation, the network element selection entity may use a Northbound-Inf (northbound interface) to send, to the EMS, the migration instruction for migrating at least one UE that has registered with the third serving MMNE. The northbound interface is an interface provided by the EMS for an NMS. A specific type of the northbound interface is not limited in this embodiment of the present invention. During specific implementation, a specific type of the northbound interface may be a CORBA (Common Object Request Broker Architecture, Common Object Request Broker Architecture) interface, an MML (Man-Machine Language, man-machine language) interface, a file interface, or the like, which is specifically determined by interfaces that can be provided by an EMS of each manufacturer.

In addition, when the network element selection entity instructs, by using the EMS for the at least one UE that has registered with the third serving MMNE, the third serving MMNE to initiate a procedure of migrating the at least one UE, the at least one UE may be migrated one by one, or may be migrated in batches, and the like. When the at least one UE is migrated one by one, each migration instruction carries an identifier of a UE to be migrated this time; when the at least one UE is migrated in batches, each migration instruction carries identifiers of all the UEs to be migrated this time.

502: The EMS sends the migration instruction to the third serving MMNE.

This step may be performed to trigger the third serving MMNE to initiate a procedure of migrating the UE that has registered with the third serving MMNE, and to enable the third serving MMNE to stop serving one or some UEs that have registered with the third serving MMNE and need to be migrated. A manner in which the EMS forwards the migration instruction to the third serving MMNE is not specifically limited in this embodiment of the present invention.

503: The third serving MMNE receives the migration instruction, and sends, according to the migration instruction, a context release request message to the UE that has registered with the third serving MMNE.

During a specific communication process, after the MMNE initiates a release procedure with a cause value " Load Balancing TAU Required (load balancing requirement), the UE that has camped on a network may not add an identifier of an MMNE with which the UE has registered in an RRC Connection Setup Complete message (RRC connection setup complete message) subsequently. Therefore, the third serving MMNE receives a migration instruction, and sends, according to the migration instruction, a context release request message to the UE that has registered with the third serving MMNE, so that the UE that has registered with the third serving MMNE learns about a target serving MMNE. The context release request message is the foregoing Load Balancing TAU Required.

504: The UE that has registered with the third serving MMNE receives the context release request message, and sends a TAU request to the serving base station device.

After receiving the context release request message, the UE knows that an MMNE needs to be reselected. At this time, the UE may send, to the serving base station device, a TAU request to trigger a TAU process.

505: The serving base station device receives the TAU request, and sends the TAU request to the network element selection entity.

After the third serving MMNE initiates a release procedure with a cause value "Load Balancing TAU Required", each UE that has camped on a network may not add registeredMME in an RRC Connection Setup Complete message subsequently. Therefore, the serving base station device reselects a serving MMNE for the UE according to the TAU request. For a manner in which the serving base station device reselects the serving MMNE for the UE according to the TAU request, in this embodiment of the present invention, the serving base station device selects the network element selection entity as the first serving MMNE of the UE, and the network element selection entity may allocate an MMNE to the UE according to a prestored correspondence between user information and at least one candidate serving MMNE; therefore, the serving base station device sends the TAU request to the network element selection entity, to trigger the network element selection entity to allocate a second serving MMNE to the UE according to the prestored correspondence between user information and at least one candidate serving MMNE.

506: The network element selection entity receives the TAU request, and acquires, according to the TAU request in a registration procedure, user information of the UE.

A manner in which the network element selection entity receives the TAU request and a manner of acquiring, according to the TAU request in the registration procedure, user information of each UE that has camped on the network are not limited in this embodiment of the present invention. Specifically, this embodiment is specific to the UE that has registered with the third serving MMNE; therefore, the registration process corresponds to the TAU procedure. For details about specific content of the TAU procedure and the manner of acquiring the user information of the UE according to the TAU request in the registration procedure, refer to a related protocol, which is not specifically limited in this embodiment of the present invention.

507: The network element selection entity selects, according to a correspondence between the user information and at least one candidate serving MMNE, the second serving MMNE selected for the UE.

A principle of this step is the same as the principle of step 404 in the embodiment shown in FIG. 4. For details, refer to step 404 in the embodiment shown in FIG. 4, which is not described herein again.

508: The network element selection entity allocates a GUTI that belongs to the second serving MMNE for the UE, and returns, by using the serving base station device, an attach accept message that carries the GUTI to the UE.

A principle of this step is the same as the principle of step 405 in the embodiment shown in FIG. 4. For details, refer to step 405 in the embodiment shown in FIG. 4, which is not described herein again.

509: The UE receives the attach accept message that carries the GUTI.

A principle of this step is the same as the principle of step 406 in the embodiment shown in FIG. 4. For details, refer to step 406 in the embodiment shown in FIG. 4, which is not described herein again.

510: The network element selection entity sends, to the UE, a detach message used to indicate performing an implicit detach, where the detach message includes indication information indicating re-initiation of an attach procedure.

A principle of this step is the same as the principle of step 407 in the embodiment shown in FIG. 4. For details, refer to step 407 in the embodiment shown in FIG. 4, which is not described herein again.

511: The UE receives the detach message, and sends, according to the detach message, a re-attach request message that carries the GUTI to the serving base station device.

A principle of this step is the same as the principle of step 408 in the embodiment shown in FIG. 4. For details, refer to step 408 in the embodiment shown in FIG. 4, which is not described herein again.

512: The serving base station device receives the re-attach request message, and uses an MMNE corresponding to the GUTI as the second serving MMNE of the UE.

A principle of this step is the same as the principle of step 409 in the embodiment shown in FIG. 4. For details, refer to step 409 in the embodiment shown in FIG. 4, which is not described herein again.

According to the method according to this embodiment of the present invention, a serving MMNE is selected for a UE according to a correspondence between user information of the UE and a candidate serving MMNE, which can implement re-allocation of a serving MMNE for the UE that has registered with a third serving MMN, so that the UE that has registered with the third serving MMNE and has a particular feature may reselect a specific MMNE, which improves flexibility of selecting an MMNE compared with a prior art. In addition, by modifying a correspondence between user information of a UE and a candidate serving MMNE, an operator can select an MMNE for the UE according to different policies, which facilitates network management of the operator.

It should be noted that when the network element selection entity provided in the foregoing embodiment executes the user equipment registration method, division of the foregoing function modules is exemplary only. In actual implementation, the foregoing functions may be allocated to different modules and implemented as required, that is, an inner structure of the device is divided into different function modules to implement all or some of the functions described previously. In addition, the network element selection entity provided in the foregoing embodiments and the user equipment registration method embodiments belong to a same idea. For specific implementation processes thereof, refer to the method embodiments, and details are not described herein again.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from principle of the present invention shall fall within the protection scope of the present invention.

## Claims

1. A network element selection entity, wherein the network element selection entity is selected by a serving base station device of a user equipment UE as a first serving mobility management network element MMNE of the UE, and the network element selection entity comprises:
a communications unit, configured to receive or send information;
a processing unit, configured to:
in a registration procedure in which the UE registers with the network element selection entity, acquire user information of the UE by using the communications unit;
determining, according to a correspondence between the user information and at least one candidate serving MMNE, a second serving MMNE selected for the UE;
allocating, to the UE by using the communications unit, a globally unique temporary user equipment identity GUTI that belongs to the second serving MMNE;
instructing, by using the communications unit, the UE to re-initiate an attach procedure, so that the UE attaches to the second serving MMNE according to the GUIT.

2. The network element selection entity according to claim 1, wherein the processing unit is specifically configured to:
in the registration procedure, acquire, by using the communications unit, the user information of the UE from the UE or a home subscriber server HSS.

3. The network element selection entity according to claim 1 or 2, wherein the processing unit is specifically configured to:
determine the second serving MMNE from a plurality of candidate serving MMNEs according to a correspondence between the user information and the plurality of candidate serving MMNEs, and priorities of the plurality of candidate serving MMNEs.

4. The network element selection entity according to any one of claims 1 to 3, wherein the processing unit is further configured to:
if the UE has registered with a third serving MMNE before the registration procedure, instructing, by using the communications unit, an element management system EMS to instruct the third serving MMNE to initiate a procedure for the UE for migrating the UE, so that the UE registers with the network element selection entity.

5. The network element selection entity according to any one of claims 1 to 4, wherein:
that the network element selection entity is selected by the serving base station device of the UE as the first serving MMNE of the UE comprises:
if the UE does not notify the serving base station device of an identifier of a registered MMNE when the UE establishes a radio resource control RRC connection to the serving base station device, the network element selection entity is selected by the serving base station device of the UE as the first serving MMNE of the UE.

6. The network element selection entity according to any one of claims 1 to 5, wherein:
an interface protocol between the network element selection entity and the serving base station device is an interface protocol used between a device on an access network and a device used for mobility management on a core network.

7. The network element selection entity according to any one of claims 1 to 6, wherein the processing unit is specifically configured to:
sending, to the UE by using the communications unit, a detach message used to indicate performing an implicit detach, wherein the detach message comprises indication information indicating re-initiation of an attach procedure.

8. The network element selection entity according to any one of claims 1 to 7, wherein the second serving MMNE is an MMNE of a virtual operator or an MMNE of a traditional operator.

9. The network element selection entity according to any one of claims 1 to 8, wherein;
the user information comprises at least one of the following: international mobile subscriber identity IMSI information, tracking area identification TAI information, access point name APN information, and subscription information.

10. The network element selection entity according to any one of claims 1 to 9, wherein:
the network element selection entity is an MMNE; or,
the network element selection entity is a device that provides a virtual MMNE service; or,
the network element selection entity is a device that comprises an MMNE; or,
the network element selection entity is a device that manages an MMNE or an MMNE pool.

11. A user equipment registration method, comprising:
acquiring, by a network element selection entity in a registration procedure in which a user equipment UE registers with the network element selection entity, user information of the UE, wherein the network element selection entity is selected by a serving base station device of the UE as a first serving mobility management network element MMNE of the UE;
determining, by the network element selection entity according to a correspondence between the user information and at least one candidate serving MMNE, a second serving MMNE selected for the UE;
allocating, by the network element selection entity to the UE, a globally unique temporary user equipment identity GUTI that belongs to the second serving MMNE;
instructing, by the network element selection entity, the UE to re-initiate an attach procedure, so that the UE attaches to the second serving MMNE according to the GUIT.

12. The method according to claim 11, wherein the acquiring, by a network element selection entity in a registration procedure in which a user equipment UE registers with the network element selection entity, user information of the UE comprises:
acquiring, by the network element selection entity in the registration procedure, the user information of the UE from the UE or a home subscriber server HSS.

13. The method according to claim 11 or 12, wherein:
the determining, by the network element selection entity according to a correspondence between the user information and at least one candidate serving MMNE, a second serving MMNE selected for the UE comprises:
determining, by the network element selection entity, the second serving MMNE from a plurality of candidate serving MMNEs according to a correspondence between the user information and the plurality of candidate serving MMNEs, and priorities of the plurality of candidate serving MMNEs.

14. The method according to any one of claims 11 to 13, wherein, the UE has registered with a third serving MMNE before the registration procedure, and the method further includes:
instructing, by the network element selection entity by using an element management system EMS, the third serving MMNE to initiate a procedure for the UE for migrating the UE, so that the UE registers with the network element selection entity.

15. The method according to any one of claims 11 to 14, wherein that the network element selection entity is selected by the serving base station device of the UE as the first serving mobility management network element MMNE of the UE comprises:
if the UE does not notify the serving base station device of an identifier of a registered MMNE when the UE establishes a radio resource control RRC connection to the serving base station device, the network element selection entity is selected by the serving base station device of the UE as the first serving MMNE of the UE.

16. The method according to any one of claims 11 to 15, wherein:
an interface protocol between the network element selection entity and the serving base station device is an interface protocol used between a device on an access network and a device used for mobility management on a core network.

17. The method according to any one of claims 11 to 16, wherein the instructing, by the network element selection entity, the UE to re-initiate an attach procedure comprises:
sending, by the network element selection entity to the UE, a detach message used to indicate performing an implicit detach, wherein the detach message comprises indication information indicating re-initiation of an attach procedure.

18. The method according to any one of claims 11 to 17, wherein the second serving MMNE is an MMNE of a virtual operator or an MMNE of a traditional operator.

19. The method according to any one of claims 11 to 18, wherein:
the user information comprises at least one of the following: international mobile subscriber identity IMSI information, tracking area identification TAI information, access point name APN information, and subscription information.

20. The method according to any one of claims 11 to 19, wherein:
the network element selection entity is an MMNE; or,
the network element selection entity is a device that provides a virtual MMNE service; or,
the network element selection entity is a device that comprises an MMNE; or,
the network element selection entity is a device that manages an MMNE or an MMNE pool.
